# EUROPEAN PATENT APPLICATION

(11) **EP 0 861 847 A2**
(43) Date of publication of application: **02.09.1998**
(21) Application number: 98301393.9
(22) Date of filing: 25.02.1998
(51) Int. Cl.: C07F 9/6574, C09K 15/32, C08K 5/527

(54) **Stabilizer composition and use thereof**

(30) Priority: 26.02.1997 JP 42141/97
(71) Applicant: Sumitomo Chemical Company, Limited, Chuo-ku Osaka 541-8550 (JP)
(72) Inventor: Fukuda, Kanako, Sakai-shi, Osaka (JP); Inui, Naoki, Yamatokoriyama-shi, Nara (JP); Kikuchi, Taketoshi, Toyonaka-shi, Osaka (JP)
(74) Representative: Cresswell, Thomas Anthony

(57) **Abstract**

A stabilizer composition which manifests an improved effect against thermal degradation and oxidation degradation of an organic material comprises a phosphite of formula (I) 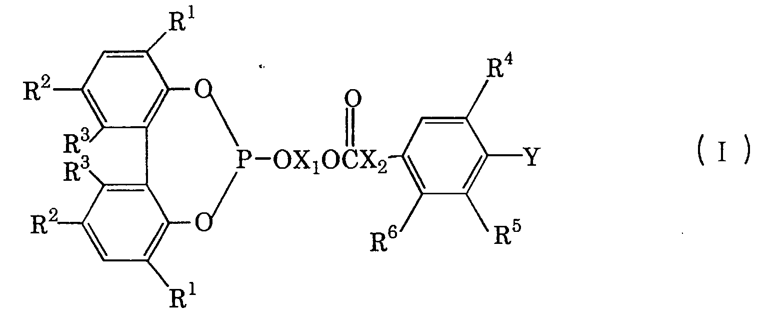 wherein R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, R³ and R⁶ each independently represent a hydrogen atom or an alkyl group having 1 to 8 carbon atoms, X₁ represents a divalent alcohol residue, X₂ represents a direct bond or an alkylene group having 1 to 8 carbon atoms, and Y represents a hydroxyl group, and an amine (A).

## Description

The present invention relates to a stabilizer composition comprising a novel phosphite and an amine and use thereof.

It is known that when organic materials such as a thermoplastic resin, thermosetting resin, natural or synthetic rubber, mineral oil, lube oil, adhesive and paint are produced, processed or used, they are often degraded by the action of heat, oxygen and the like, accompanied by phenomena such as molecular cleavage and molecular crosslinking. As the result, market value thereof are remarkably lowered. It is conventionally known to stabilize an organic material by inclusion of a stabilizer composition comprising a phosphorus antioxidant and an amine in order to solve such problems as heat degradation and oxygen degradation.

For example, there are suggested a stabilizer composition comprising triphenylphosphite and alkanolamine, a stabilizer composition comprising bis(2,4-di-t-butylphenyl)pentaerythritol diphosphite and alkanolamine, a stabilizer composition comprising bis(2,4-di-t-butylphenyl)pentaerythritol diphosphite and polyalkylenepolyamine, a stabilizer composition comprising bis(2,4-di-t-butylphenyl)pentaerythritol diphosphite and hindered amine stabilizer, and the like (JP-A-63-63686, JP-A-61-17595, JP-A-55-145742, JP-A-6-329830, JP-A-7-90270 and JP-A-7-278164).

However, these known stabilizer compositions have a problem that stabilizing effect for thermal degradation and oxidation degradation is insufficient.

The present inventors have intensively studied phosphorus-based compounds to develop a stabilizer composition manifesting improved effect for thermal degradation and oxidation degradation of an organic material. As a result, it is found that a stabilizer composition comprising a specific 7-membered cyclic phosphite and an amine shows excellent property. Thus, the present invention was completed.

The present invention provides a stabilizer composition which comprises a phosphite represented by the following general formula (I) 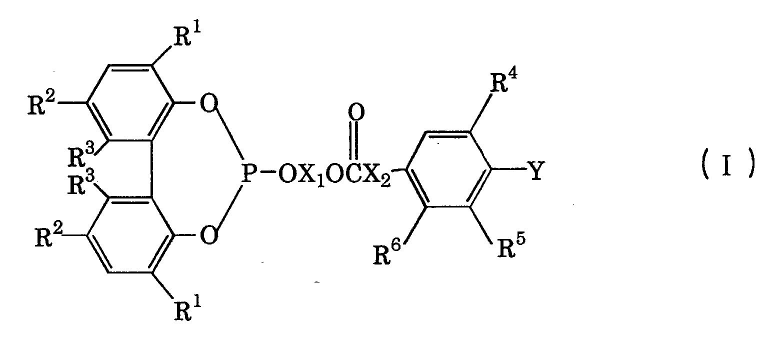 wherein R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, R³ and R⁶ represent each independently a hydrogen atom or an alkyl group having 1 to 8 carbon atoms, X₁ represents a divalent alcohol residue, X₂ represents a merely bond or an alkylene group having 1 to 8 carbon atoms, and Y represents a hydroxyl group,
and an amine (A).

The present invention also provides use of the stabilizer composition.

In the phosphite represented by the general formula (I) of the present invention, substituents R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group.

Examples of the alkyl group having 1 to 8 carbon atoms include methyl, ethyl, n-propyl, i-propyl, n-butyl, i-butyl, sec-butyl, t-butyl, t-pentyl, i-octyl, t-octyl and 2-ethylhexyl.

Examples of the cycloalkyl group having 5 to 8 carbon atoms include cyclopentyl, cyclohexyl, cycloheptyl and cyclooctyl. Examples of the alkylcycloalkyl group having 6 to 12 carbon atoms include 1-methylcyclopentyl, 1-methylcyclohexyl and 1-methyl-4-i-propylcyclohexyl. Examples of the aralkyl group having 7 to 12 carbon atoms include benzyl, α-methylbenzyl and α,α-dimetylbenzyl.

Especially, R¹ is preferably t-alkyl such as t-butyl, t-pentyl and t-octyl. R² is preferably an alkyl group having 1 to 5 carbon atoms such as methyl, ethyl, n-propyl, i-propyl, n-butyl, i-butyl, sec-butyl, t-butyl and t-pentyl. Among them, t-butyl is particularly preferred. R⁴ and R⁵ are preferably an alkyl group having 1 to 5 carbon atoms such as methyl, ethyl, n-propyl, i-propyl, n-butyl, i-butyl, sec-butyl, or t-alkyl such as t-butyl and t-pentyl. More preferably, one of R⁴ and R⁵ is a t-alkyl group, particularly a t-butyl group, and another is an alkyl group having 1 to 5 carbon atoms, particularly a methyl group or t-butyl group. Particularly preferably, both of R⁴ and R⁵ are a t-butyl group.

The substituents R³ and R⁶ represent each independently a hydrogen atom or an alkyl group having 1 to 8 carbon atoms. Examples of the alkyl group having 1 to 8 carbon atoms as R³ and R⁶ include methyl, ethyl, n-propyl, i-propyl, n-butyl, i-butyl, sec-butyl, t-butyl, t-pentyl, i-octyl, t-octyl and 2-ethylhexyl.

Preferably, it is a hydrogen atom or an alkyl group having 1 to 5 carbon atoms, particularly a hydrogen atom or a methyl group.

The divalent alcohol residue, as X₁, means a residue obtained by removing two hydroxyl groups from a divalent alcohol. Examples thereof include residues of alkylene diols such as ethylene glycol, 1,2-propane diol, 1,3-propane diol, 1,2-butane diol, 1,3-butane diol, 1,4-butane diol, 2,3-butane diol, 2-methyl-1,3-propane diol, 1,2-pentane diol, 1,5-pentane diol, 2,4-pentane diol, neopentyl glycol, 1,2-hexane diol, 1,5-hexane diol, 1,6-hexane diol, 2,5-hexane diol, 2-methyl-2,4-pentane diol, 2-methyl-1,5-pentane diol, 3,3-dimethylbutane diol, 2,3-dimethyl-2,3-butane diol, 2-ethyl-2-methyl-1,3-propanol, 2,2-diethyl-1,3-propane diol, 2,4-dimethyl-2,4-pentane diol, 1,2-octane diol, 1,8-octane diol, 2,5-dimethyl-2,5-hexane diol, 2-ethyl-1,3-hexane diol, 2,2,4-trimethyl-1,3-pentane diol, 1,9-nonane diol, 2-butyl-2-ethyl-1,3-propane diol, 1,2-decane diol, 1,10-decane diol, 1,12-dodecane diol, 1,2-tetradecane diol, 1,14-tetradecane diol, 1,2-hexadecane diol and 1,16-hexadecane diol;
residues of diols having a double bond such as 2-butene-1,4-diol, 2-methylene-1,3-propane diol, 5-hexene-1,2-diol and 7-octane-1,2-diol;
residues of cyclic diols such as 1,2-cyclopentane diol, 1,3-cyclopentane diol, 1,2-cyclohexane diol, 1,3-cyclohexane diol, 1,4-cyclohexan diol, 1,2-cycloocta diol, 1,4-cyclooctane diol, 1,5-cyclooctane diol, p-pentane-3,8-diol and 4,4'-isopropylidenedicyclohexanol; and diols having a hetero atom such as diethylene glycol, triethylene glycol, 3,9-bis(1,1-dimethyl-2-hydroxyethyl)-2,4,8,10-tetraoxaspiro[5,5]undecane, neopentyl glycol hydroxypivalate, 2,2'-thiodiethanol, 2-methylthio-1,2-propane diol and diethanolamine.

The substituent X₂ represents a direct bond or an alkylene group having 1 to 8 carbon atoms. Examples of the alkylene group as X₂ include ethylene, propylene, butylene, pentamethylene, hexamethylene, octamethylene and 2,2-dimethyl-1,3-propylene.

The phosphite represented by the general formula (I) can be produced, for example, by reacting bisphenols represented by the general formula (II) 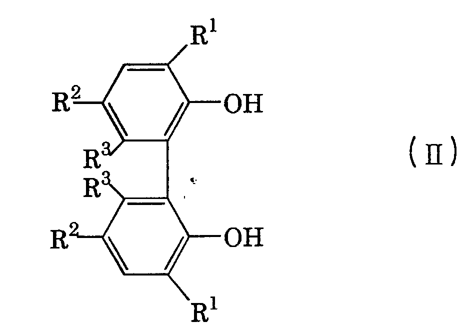 wherein R¹, R² and R³ are as defined above,
a phosphorus trihalide and alcohols represented by the general formula (III) 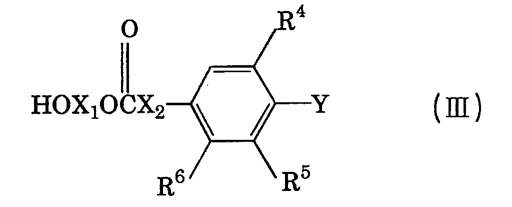 wherein R⁴, R⁵, R⁶, X₁, X₂ and Y are as defined above in the presence of a de-hydrogen halide agent. Examples of the de-hydrogen halide agent include an amine compound, pyridines, pyrrolidines and amides.

The reaction can be accelerated by coexistence of the de-hydrogen halide agent , a hydroxide of alkali metal or alkaline earth metal.

The amine compound as the de-hydrogen halide agent may be any of a primary amine, secondary amine and tertiary amine. Examples thereof include t-butylamine, t-pentylamine, t-hexylamine, t-octylamine, di-t-butylamine, di-t-pentylamine, di-t-hexylamine, di-t-octylamine, trimethylamine, triethylamine, N,N-dimethylaniline and N,N-diethylaniline. Among them, triethylamine is preferred.

Examples of the pyridines as the de-hydrogen halide agent include pyridine and picoline. Among them, pyridine is preferred. Examples of pyrrolidines as the de-hydrogen halide agent include 1-metyl-2-pyrrolidine.

Examples of the amides as the de-hydrogen halide agent include N,N-dimethylformamide and N,N-dimethylacetoamide. Among them, N,N-dimetylformamide is preferably used.

Examples of the hydroxide of alkali metal or alkaline earth metal include sodium hydroxide and potassium hydroxide. Among them, sodium hydroxide is preferred.

The reaction is usually conducted in an organic solvent. The organic solvent is not particularly restricted provided it does not retard the reaction. Examples thereof include aromatic hydrocarbons, aliphatic hydrocarbons, oxygen-containing hydrocarbons and halogenated hydrocarbons.

Examples of the aromatic hydrocarbons include benzene, toluene, xylene and ethylbenzen. Examples of the aliphatic hydrocarbons include n-hexane, n-heptane and n-octane. Examples of the oxygen-containing hydrocarbons include diethyl ether, dibutyl ether, tetrahydrofuran and 1,4-dioxane. Examples of the halogenated hydrocarbons include chloroform, carbon tetrachloride, monochlorobenzene, dichloromethane, 1,2-dichloroethane and dichlorobenzene.

Among them, toluene, xylene, diethyl ether, tetrahydrofuran, 1,4-dioxane, chloroform, dichloromethane and the like are preferably used.

For conducting this reaction, there is usually adopted a two step reaction method in which the biphenol (II) (hereinafter, this expression represent the compound of the formula of the corresponding number) is first reacted with a phosphorus trihalide to form an intermediate in the presence of a de-hydrogen halide agent, then the intermediate is reacted with an alcohol compound (III),

In this method, the phosphorus trihalide is used in an amount preferably from 1 to 1.1 times by mol, more preferably from 2 to 2.4 times by mol based on the bisphenol (II).

In this method, the de-hydrogen halide agent is used in an amount preferably from 2 to 2.4 times by mol, more preferably from 2 to 2.1 times by mol based on the phosphorus trihalide.

The reaction of the bisphenol (II) with the phosphorus trihalide is usually effected at a temperature from 0 to 150°C. An intermediate, halogeno phosphite,'is formed by this reaction, which is usually subjected to a reaction with the alcohol (III) in the form of the reaction mixture intact, although this may be isolated before being subjected to the following reaction.

In the reaction, the alcohol (III) are usually used in an amount from 1 to 1.1 times by mol based on the bisphenol (II).

For this reaction with the alcohol (III), it is preferable that a de-hydrogen halide agent is further added. The amount of the de-hydrogen halide agent further added is preferably from 1 to 1.2 times by mol based on the alcohol (III). The amount of the de-hydrogen halide agent further added in the reaction with the alcohol (III) is usually calculated including the remaining de-hydrogen halide agent, when an excess of the de-hydrogen halide agent is used in the first reaction.

The reaction is conducted at a temperature usually from 100 to 150°C. This reaction is preferably effected under reflux.

After completion of the reaction, a hydrogen halide salt of the de-hydrogen halide agent formed by the reaction is removed, and the solvent is further removed, then the phosphite (I) used in the present invention can be obtained by performing suitable post-treatment such as crystallization and column chromatography.

The bisphenol (II), raw materials of the phosphite (I) can be produced, for example, by condensing alkylphenols according to a known method such as a method described in JP-B-2-47451. As the biphenol (II), commercially available compounds may also be used.

Examples of the biphenol (II) include biphenyl-2,2'-diol, 3,3',5,5'-tetra-t-butylbiphenyl-2,2'-diol, 3,3',5,5'-tetra-t-pentylbiphenyl-2,2'-diol and 3,3'-di-t-butyl-5,5'-dimethylbiphenyl-2,2'-diol.

The alcohol (III), another raw material can be produced, for example, by reacting phenylcarboxylic acids represented by the general formula (IV): 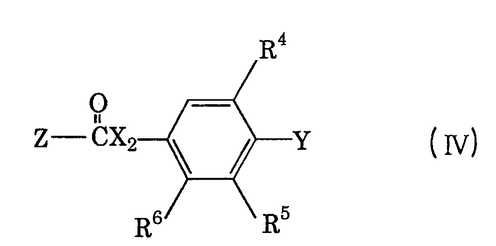 wherein R⁴, R⁵, R⁶, X₂ and Y are as defined above, Z represents, for example, a lower alkoxy group such as those having 1 to about 4 carbon atoms, hydroxyl group or halogen atom, with a divalent alcohol represented by the formula: HO-X₁-OH wherein X₁ is as defined above, according to a known method.

For example, when Z in the phenylcarboxylic acids is a lower alkoxy group, there can be adopted a method in which the phenylcarboxylic acid (IV) and an approximately equimolar amount of divalent alcohol are melted with heating, to this is added a small amount of a catalyst, and the mixture is further heated, and the reaction is proceeded with distilling off a monovalent alcohol generated in the reaction. The reaction proceeds usually at a temperature from room temperature to about 200°C. After completion of the reaction, the mixture is diluted-by adding a solvent, the resulted solution is washed with water, the solvent is distilled off, and the residues is purified, for example, by column chromatography and the like, to obtain the alcohol (III).

In this reaction, the divalent alcohol is used in an amount of usually 1 time by mol or more, preferably from 1 to 1.2 times by mol based on the phenylcarboxylic acid (IV).

Examples of the catalyst include a metal alkoxide such as sodium methoxide, lithium methoxide, sodium ethoxide, sodium-t-butoxide, potassium methoxide, potassium ethoxide and potassium-t-butoxide; an alkali metal amide such as lithiumamide; a metal alkylamide such as lithiumdiisopropylamide; a hydride, oxide, hydroxide and carbonate of alkali metal or alkaline earth metal such as lithium hydride, sodium hydride, potassium hydride, calcium hydride, sodium oxide, potassium oxide, calcium oxide, sodium hydroxide, lithium hydroxide, potassium hydroxide, calcium hydroxide, lithium carbonate, sodium carbonate, potassium carbonate, calcium carbonate and barium carbonate; dibutyltin oxide and dioctyltin oxide, a dialkyltin aloxide such as dibutyltin methoxide, a dialkyltin dicarboxylate such as dibutyltin acetate, dibutyltin maleate, dibutyltin dioctanoate and dibutyltin dilaurate; organometal represented by the general formula (V):

(R⁶O)₄M (v)

wherein R⁶ represents an alkyl group having 1 to 18 carbon atoms, a phenyl group or benzyl group, M represents germanium, zirconium, tin or titanium; and
a mixture of two or more of them.

Among them, sodium methoxide, lithiumamide, dibutyltin oxide and the like are preferably used.

These catalysts are used in an amount usually from 0,01 to 0.5 times by mol based on the phenylcarboxylic acid (IV).

As the solvent used for diluting the reaction mixture, an aromatic hydrocarbon, aliphatic hydrocarbon, alcohols or ethers are used. Among the solvents, an aromatic hydrocarbon, such as toluene, xylene and monochlorobenzene, is usually preferred.

Examples of the alcohols (III) include 2-hydroxyethyl -3-t-butyl-4-hydroxybenzoate, 2-hydroxyethyl 3-t-pentyl-4-hydroxybenzoate, 2-hydroxyethyl 3-t-octyl-4-hydroxybenzoate, 2-hydroxyethyl 3-cyclohexyl-4-hydroxybenzoate, 2-hydroxyethyl 3-(1-methylcyclohexyl)-4-hydroxybenzoate, 2-hydroxyethyl 3-t-butyl-2-hydroxy-5-methylbenzoate, 2-hydroxyethyl 3-t-butyl-4-hydroxy-5-methylbenzoate, 3-hydroxypropyl 3-t-butyl-4-hydroxy-5-methylbenzoate, 4-hydroxybutyl 3-t-butyl-4-hydroxy-5-methylbenzoate, 2-hydroxyethyl 3-t-pentyl-4-hydroxy-5-methylbenzoate, 2-hydroxyethyl 3-t-octyl-4-hydroxy-5-methylbenzoate, 2-hydroxyethyl 3-cyclohexyl-4-hydroxy-5-methylbenzoate, 2-hydroxyethyl 3-(1-methylcyclohexyl)-4-hydroxy-5-methylbenzoate, 2-hydroxyethyl 3-t-butyl-4-hydroxy-5-ethylbenzoate, 2-hydroxyethyl 3-t-pentyl-4-hydroxy-5-ethylbenzoate, 2-hydroxyethyl 3-t-octyl-4-hydroxy-5-ethylbenzoate, 2-hydroxyethyl 3-cyclohexyl-4-hydroxy-5-ethylbenzoate, 2-hydroxyethyl 3-(1-methylcyclohexyl)-4-hydroxy-5-ethylbenzoate, 2-hydroxyethyl 3,5-di-t-butyl-4-hydroxybenzoate, 3-hydroxyethyl 3,5-di-t-butyl-4-hydroxybenzoate, 4-hydroxybutyl 3,5-di-t-butyl-4-hydroxybenzoate, 2-hydroxyethyl 3-t-pentyl-4-hydroxy-5-t-butylbenzoate, 2-hydroxyethyl 3-t-octyl-4-hydroxy-5-t-butylbenzoate, 2-hydroxyethyl 3-cyclohexyl-4-hydroxy-5-t-butylbenzoate, 2-hydroxyethyl 3-(1-methylcyclohexyl)-4-hydroxy-5-t-butylbenzoate, 2-hydroxyethyl (3-t-butyl-4-hydroxyphenyl)acetate, 2-hydroxyethyl (3-t-butyl-5-hydroxyphenyl)acetate, 2-hydroxyethyl (3-t-pentyl-4-hydroxyphenyl)acetate, 2-hydroxyethyl (3-t-octyl-4-hydroxyphenyl)acetate, 2-hydroxyethyl (3-cyclohexyl-4-hydroxyphenyl)acetate, 2-hydroxyethyl [3-(1-methylcyclohexyl)-4-hydroxyphenyl]acetate, 2-hydroxyethyl (3-t-butyl-4-hydroxy-5-methylphenyl)acetate, 3-hydroxypropyl (3-t-butyl-4-hydroxy-5-methylphenyl)acetate, 4-hydroxybutyl (3-t-butyl-4-hydroxy-5-methylphenyl)acetate, 2-hydroxyethyl (3-t-pentyl-4-hydroxy-5-methylphenyl)acetate, 2-hydroxyethyl (3-t-octyl-4-hydroxy-5-methylphenyl)acetate, 2-hydroxyethyl (3-cyclohexyl-4-hydroxy-5-methylphenyl)acetate, 2-hydroxyethyl[3-(1-methylcyclohexyl)-4-hydroxy-5-methylphenyl]acetate, 2-hydroxyethyl (3-t-butyl-4-hydroxy-5-ethylphenyl)acetate, 2-hydroxyethyl (3-t-pentyl-4-hydroxy-5-ethylphenyl)acetate, 2-hydroxyethyl (3-t-octyl-4-hydroxy-5-ethylphenyl)acetate, 2-hydroxyethyl (3-cyclohexyl-4-hydroxy-5-ethylphenyl)acetate, 2-hydroxyethyl [3-(1-methylcyclohexyl)-4-hydroxy-5-ethylphenyl]acetate, 2-hydroxyethyl (3,5-di-t-butyl-4-hydroxyphenyl)acetate, 3-hydroxypropyl (3,5-di-t-butyl-4-hydroxyphenyl)acetate, 4-hydroxybutyl (3,5-di-t-butyl-4-hydroxyphenyl)acetate, 2-hydroxyethyl (3-t-pentyl-4-hydroxy-5-butylphenyl)acetate, 2-hydroxyethyl (3-t-octyl-4-hydroxy-5-t-butylphenyl)acetate, 2-hydroxyethyl (3-cyclohexyl-4-hydroxy-5-t-butylphenyl)acetate, 2-hydroxyethyl [3-(1-methylcyclohexyl)-4-hydroxy-5-t-butylphneyl]acetate, 2-hydroxyethyl 3-(3-t-butyl-2-hydroxyphenyl)propionate, 2-hydroxyethyl 2-(3-t-pentyl-4-hydroxyphenyl)propionate, 2-hydroxyethyl 3-(3-t-octyl-4-hydroxyphenyl)propionate, 2-hydroxyethyl 3-(3-cyclohexyl-4-hydroxyphenyl)propionate, 2-hydroxyethyl 3-[3-(1-methylcyclohexyl)-4-hydroxyphenyl]propionate, 2-hydroxyethyl 3-(3-t-butyl-4-hydroxy-5-methylphenyl)propionate, 3-hydroxybutyl 3-(3-t-butyl-4-hydroxy-5-methylphenyl)propionate, 4-hydroxybutyl 3-(3-t-butyl-4-hydroxy-5-methylphenyl)propionate, 2-hydroxyethyl 3-(3-t-pentyl-4-hydroxy-5-methylphenyl)propionate, 2-hydroxyethyl 3-(3-t-octyl-4-hydroxy-5-methylphenyl)propionate, 2-hydroxyethyl 3-(3-cyclohexyl-4-hydroxy-5-methylphenyl)propionate, 2-hydroxyethyl 3-[3-(1-methylcyclohexyl)-4-hydroxy-5-methylphenyl]propionate, 2-hydroxyethyl 3-(3-t-butyl-4-hydroxy-5-ethylphenyl)propionate, 2-hydroxyethyl 3-(3-t-pentyl-4-hydroxy-5-ethylphenyl)propionate, 2-hydroxyethyl 3-(3-t-octyl-4-hydroxy-5-ethylphenyl)propionate, 2-hydroxyethyl 3-(3-cyclohexyl-4-hydroxy-5-ethylphenyl)propionate, 2-hydroxyethyl 3-[3-(1-methylcyclohexyl)-4-hydroxy-5-ethylphenyl]propionate, 2-hydroxyethyl 3-(3,5-di-t-butyl-4-hydroxyphenyl)propionate, 3-hydroxypropyl 3-(3,5-di-t-butyl-4-hydroxyphenyl)propionate, 4-hydroxybutyl 3-(3,5-di-t-butyl-4-hydroxyphenyl)propionate, 2-hydroxyethyl 3-(3-t-pentyl-4-hydroxy-5-butylphenyl)propionate, 2-hydroxyethyl 3-(3-t-octyl-4-hydroxy-5-t-butylphenyl)propionate, 2-hydroxyethyl 3-(3-cyclohexyl-4-hydroxy-5-t-butylphenyl)propionate, 2-hydroxyethyl 3-[3-(1-methylcyclohexyl)-4-hydroxy-5-t-butylphneyl]propionate, 2-hydroxyethyl 4-(3-t-butyl-4-hydroxyphenyl)butyrate, 2-hydroxyethyl 4-(3-t-butyl-4-hydroxy-5-methylphenyl)butyrate, 3-hydroxypropyl 4-(3-t-butyl-4-hydroxy-5-methylphenyl)butyrate, 4-hydroxybutyl 4-(3-t-butyl-4-hydroxy-5-methylphenyl)butyrate, 2-hydroxyethyl 4-(3,5-di-t-butyl-4-hydroxyphenyl)butyrate, 3-hydroxypropyl 4-(3,5-di-t-butyl-3-hydroxyphenyl)butyrate and 4-hydroxybutyl 4-(3,5-di-t-butyl-4-hydroxyphenyl)butyrate.

Examples of the amine (A) comprised in the stabilizer composition of the present invention include trialkanolamines such as triethanolamine, tripropanolamine and tri-i-propanolamine; dialkanolamines such as diethanolamine, dipropanolamine, di-i-propanolamine, tetraethanolethylenediamine and tetra-i-propanolethylenediamine; monoalkanolamines such as dibutylethanolamine and dibutyl-i-propanolamine; aromatic amines such as 1,3,5-trimethyl-2,4,6-triazine; alkylamines such as dibutylamine, pyperidine, 2,2,6,6-tetramethylpiperidine and 4-hydroxy-2,2,6,6-tetramethylpiperidine; polyalkylenepolyamines such as hexamethylenetetramine, triethylenediamine, triethylenetetramine and tetraethylenepentamine; and hindered amine-based photostabilizers as described below.

Long chain aliphatic amines described in JP-A-61-63686, compound containing a steric hindered amine group described in JP-A-6-329830, hindered piperidinyl-based photostabilizers described in JP-A-7-90270, and organic amines described in JP-A-7-278164 can also be used for the amine (A).

Amount of the amine (A) comprised in the stabilizer composition of the present invention is usually from about 0.01 to 25% by weight, preferably from about 0.05 to 15% by weight, and more preferably from about 0.1 to 10% by weight, based on amount of the phosphite (I) .

The stabilizer composition of the present invention can optionally contain, for example, ultra fine zinc oxide described in JP-A-6-329830, inorganic compounds such as an acid-bonded metal salt containing hydrotalcide, zeolite and the like described in JP-A-7-278164.

The stabilizer composition can be produced, for example, by blending the phosphite (I) with an amine (A), and optionally other additives such as the above-mentioned inorganic compound.

The method for blending is not particularly restricted. For example, blending may be effected by mixing the phosphite (I) in the form of a melted state with an amine (A), by mechanically mixing the phosphite (I) in the form of a crystal with the amine (A), or by dissolving the both compounds in an organic solvent such as toluene and isopropanol. When the phosphite (I) is obtained in the production process as a solution of crude phosphite in an organic solvent, the blending can be also effected by adding amine to this solution. When the stabilizer composition thus obtained is a mixture with an organic solvent, then, the organic solvent is usually removed, for example, by solvent distillation, crystallization filtration and drying.

The stabilizer composition of the present invention are effective for stabilizing the organic material against heat deterioration and oxidization deterioration. Examples of the organic material which can be stabilized by the stabilizer composition of the present invention include those listed below. They can be stabilized alone or in combination thereof. The organic material which can be stabilized by the stabilizer composition of the present invention are not limited to the organic materials listed below.
(1) polyethylene, for example, high-density polyethylene (HD-PE), low-density polyethylene (LD-PE) and straight-chain low-density polyethylene (LLDPE)
(2) polypropylene
(3) methylpentene polymer
(4) EEA (ethylene/ethyl acrylate copolymer) resin
(5) ethylene/vinyl acetate copolymer resin
(6) polystyrenes, for example, polystyrene, poly(p-methylstyrene) and poly( α-methylstyrene)
(7) As (acrylonitrile/styrene copolymer) resin
(8) ABS (acrylonitrile/butadiene/styrene copolymer) resin
(9) AAS (special acrylic rubber/acrylonitrile/styrene copolymer) resin
(10) ACS (acrylonitrile/chlorinated polyethylene/styrene copolymer) resin
(11) chlorinated polyethylene, polychloroprene, chlorinated rubber
(12) polyvinyl chloride, polyvinylidene chloride
(13) methacrylic resin
(14) etyhylene/vinyl alcohol copolymer resin
(15) fluororesin
(16) polyacetal
(17) grafted polyphenylene ether resin and polyphenylene sulfide resin
(18) polyurethane
(19) polyamide
(20) polyester resin, for example, polyethylene terephthalate and polybutylene terephthalate
(21) polycarbonate
(22) polyacrylate
(23) polysulfone, polyether ether ketone, polyether sulfone
(24) thermoplastic resin such as aromatic polyester resin, etc.
(25) epoxy resin
(26) diallyl phthalate prepolymer
(27) silicone resin
(28) unsaturated polyester resin
(29) acrylic-modified benzoguanamine resin
(30) benzoguanamine/melamine resin
(31) thermosetting resin such as urea resin, etc.
(32) polybutadiene
(33) 1,2-polybutadiene
(34) polyisoprene
(35) styrene/butadiene copolymer
(36) butadiene/acrylonitrile copolymer
(37) ethylene/propylene copolymer
(38) silicone rubber
(39) epichlorohydrin rubber
(40) acrylic rubber
(41) natural rubber
(42) chlorinated rubber paint
(43) polyester resin paint
(44) urethane resin paint
(45) epoxy resin paint
(46) acrylic resin paint
(47) vinyl resin paint
(48) aminoalkyd resin paint
(49) alkyd resin
(50) nitrocellulose resin paint
(51) oil-based paint
(52) wax
(53) lubricating oil

Among them, the thermoplastic resin, particularly polyolefin such as polyethylene (e.g. HD-PE, LD-PE, LLDPE, etc.) and polyolefin (e.g. polypropylene, etc.), and the engineering resin such as polyamide, polyethylene terephthalate, polybutylene terephthalate and polycarbonare, are more suitable to be stabilized by the stabilizer composition of the present invention.

The polyolefins are not specifically limited. For example, they may be those obtained by the radical polymerization or those produced by the polymerization using a catalyst containing a metal of Group IVb, Vb, VIb or VIII of the periodic table. The catalyst containing such a metal may be a metal complex which is coordinated by one or more ligands, for example, oxide which is coordinated by a π or σ bond, halogenated compound, alcolate, ester, aryl and the like, and these complexes may be used as it is, or a base material such as magnesium chloride, titanium chloride, alumina, silicon oxide, etc. may carry the complexes.

As the polyolefin, for example, there are preferably used those produced by using Ziegler-Natta catalyst, TNZ catalyst, metallocene catalyst, Phillips catalyst and the like.

When the organic material is stabilized by containing the stabilizer composition of the present invention, the stabilizer composition are normally formulated in an amount of about 0.01 to 5 parts by weight, preferably about 0.03 to 3 parts by weight, more preferably about 0.05 to 1 parts by weight, based on 100 parts by weight of the organic material. When the amount is less than 0.01 parts by weight, the stabilizing effect is not sufficient, necessarily. On the other hand, even when the amount exceeds 5 parts by weight, the improvement of the effect corresponding to the amount is not obtained and it is economically disadvantageous.

When the stabilizer composition of the present invention are contained in the organic material, if necessary, there can also be contained other additives such as phenol antioxidant, sulfur antioxidant, phosphorous antioxidant, ultraviolet absorber, photostabilizer, peroxide scavenger, polyamide stabilizer, hydroxylamine, lubricant, plasticizer, flame retardant, nucleating agent, metal inactivating agent, antistatic agent, pigment, filler, pigment, anti-blocking agent, surfactant, processing aid, foaming agent, emulsifier, brightener, calcium stearate, neutralizing agent (e.g. hydrotalcite, etc.), coloring modifier (e.g. 9,10-dihydro-oxa-10-phosphophenanthrene-10-oxide, etc.) and co-stabilizer (e.g. benzofurans, indolines, etc. described in U.S. Patent Nos. 4,325,853, 4,338,244, 5,175,312, 5,216,053, 5,252,643 and 4,316,611, DE-A-4,316,622 and 4,316,876, and EP-A-589,839 and 591,101). These additives can be formulated together with the stabilizer composition of the present invention, and also be formulated in the stage other than the stage where the stabilizer are formulated.

Examples of the phenol antioxidant include the followings.

### (1) Examples of alkylated monophenol

2,6-di-t-butyl-4-methylphenol, 2,4,6-tri-t-butylphenol, 2,6-di-t-butyl-4-butylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,6-di-nonyl-4-methylphenol, 2,4-dimethyl-6-(1'-methylundecyl-1'-yl)phenol, 2,4-dimethyl-6'-(1'-methylheptadecyl-1'-yl)phenol, 2,4-dimethyl-6-(1'-methyltridecyl-1'-yl)phenol and a mixture thereof.

### (2) Examples of alkylthiomethylphenol

2,4-dioctylthiomethyl-6-t-butylphenol, 2,4-dioctylthiomethyl-6-methylphenol, 2,4-dioctylthiomethyl-6-ethylphenol, 2,6-didodecylthiomethyl-4-nonylphenol and a mixture thereof

### (3) Examples of hydroquinone and alkylated hydroquinone

2,6-di-t-butyl-4-methoxyphenol, 2,5-di-t-butylhydroquinone, 2,5-di-t-amylhydroquinone, 2,6-diphenyl-4-octadecyloxyphenol, 2,6-di-t-butylhydroquinone, 2,5-di-t-butyl-4-hydroxyanisole, 3,5-di-t-butyl-4-hydroxyphenyl stearate, bis(3,5-di-t-butyl-4-hydroxyphenyl)adipate and a miture thereof

### (4) Examples of tocopherol

α-tocopherol, β-tocopherol, γ-tocopherol, δ-tocopherol and a mixture thereof

### (5) Examples of hydroxylated thiodiphenyl ether

2,2'-thiobis(6-t-butylphenol), 2,2'-thiobis(4-methyl-6-t-butylphenol), 2,2'-thiobis(4-octylphenol), 4,4'-thiobis(3-methyl-6-t-butylphenol), 4,4'-thiobis(2-methyl-6-t-butylphenol), 4,4'-thiobis(3,6-di-t-amylphenol), 4,4'-(2,6-dimethyl-4-hydroxyphenyl)disulfide and the like

### (6) Examples of alkylidenebisphenol and derivative thereof

2,2'-methylenebis(4-methyl-6-t-butylphenol), 2,2'-methylenebis(4-ethyl-6-t-butylphenol), 2,2'-methylenebis[4-methyl-6-(α-methylcyclohexyl)phenol)], 2,2'-methylenebis(4-methyl-6-cyciohexylphenol), 2,2'-methylenebis(4-methyl-6-nonylphenol), 2,2'-methylenebis(4,6-di-t-butylphenol)], 2,2'-ethylidenebis(4,6-di-t-butylphenol), 2,2'-ethylidenebis(4-isobutyl-6-t-butylphenol), 2,2'-methylenebis[6-(α-methylbenzyl)-4-nonylphenol], 2,2'-methylenebis[6-(α,α-dimethylbenzyl)-4-nonylphenol), 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2- methylphenyl)butane, 2,6-bis[3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hydroxy-2-methylphenyl)-3-n-dodecylmercaptobutane, bis[3,3-bis-3'-t-butyl-4'-hydroxyphenyl)butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl]terephthalate, 1,1-bis(3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane, 2-t-butyl-6-(3'-t-butyl-5'-methyl-2'-hydroxybenzyl)-4-methylphenyl acrylate, 2,4-di-t-pentyl-6-[1-(2-hydroxy-3,5-di-t-pentylphenyl)ethyl]phenyl acrylate and a mixture thereof.

### (7) Examples of O-, N- and S-benzyl derivative

3,5,3',5'-tetra-t-butyl-4,4'-dihydroxydibenzyl ether, octadodecyl-4-hydroxy-3,5-dimethylbenzylmercapto acetate, tris(3,5-di-t-butyl-4-hydroxybenzyl)amine, bis(4-t-butyl-3-hydroxy-2,6-dimethylbenzyl)dithioterephthalate, bis(3,5-di-t-butyl-4-hydroxybenzyl)sulfide, isooctyl-3,5-di-t-butyl-4-hydroxybenzylmercapto acetate and a mixture thereof

### (8) Examples of hydroxybenzylated malonate derivative

dioctadecyl-2,2-bis(3,5-di-t-butyl-2-hydroxybenzyl)malonate, dioctadecyl-2-(3-t-butyl-4-hydroxy-5-methylbenzyl)malonate, didodecylmercaptoethyl-2,2-bis(3,5-di-t-butyl-4-hydroxybenzyl)malonate, bis[4-(1,1,3,3-tetramethylbutyl)phenyl]-2,2-bis(3,5-di-t-butyl-4-hydroxybenzyl)malonate and a mixture thereof

### (9) Examples of aromatic hydroxybenzyl derivative

1,3,5-trimethyl-2,4,6-tris(3,5-di-t-butyl-4-hydroxybenzyl)benzene, 1,4-bis(3,5-di-t-butyl-4-hydroxybenzyl)-2,3,5,6-tetramethylbenzene, 2,4,6-tris(3,5-t-butyl-4-hydroxybenzyl)phenol and a mixture thereof

### (10) Examples of -triazine derivative

2,4-bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-hydroxy)-1,3,5-triazine, tris(4-t-butyl-3-hydroxy-2,6-dimethylbenzyl isocyanurate, tris(3,5-di-t-butyl-4-hydroxybenzyl)isocyanurate, 2,4,6-tris(3,5-di-t-butyl-4-hydroxyphenylethyl)-1,3,5-triazine, 2,4,6-tris(3,5-di-t-butyl-4-hydroxyphenylpropyl)-1,3,5-triazine, tris(3,5-dicyclohexyl-4-hydroxybenzyl)isocyanurate, tris[2-(3',5'-di-t-butyl-4'-hydroxycinnamoyloxy)ethyl]isocyanurate and a mixture thereof

### (11) Examples of benzyl phosphonate derivative

dimethyl-3,5-di-t-butyl-4-hydroxybenzyl phosphonate, diethyl-3,5-di-t-butyl-4-hydroxybenzyl phosphonate, dioctadecyl-3,5-di-t-butyl-4-hydroxybenzyl phosphonate, dioctadecyl-5-t-butyl-4-hydroxy-3-methylbenzyl phosphonate, calcium salt of 3,5-di-t-butyl-4-hydroxybenzyl phosphonic acid monoester and a mixture thereof

### (12) Examples of acylaminophenol derivative

anilide 4-hydroxylaurate, anilide 4-hydroxystearate, octyl-N-(3,5-di-t-butyl-4-hydroxyphenyl)carbanate and a mixture thereof

### (13) Ester of β-(3,5-di-t-butyl-4-hydroxyphenyl)propionic acid and the following monohydric or polyhydric alcohol:

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiro glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and a mixture thereof

### (14) Ester of β-(5-t-butyl-4-hydroxy-3-methylphenyl)propionic acid and the following monohydric or polyhydric alcohol:

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiro glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and a mixture thereof

### (15) Ester of β-(3,5-dicyclohexyl-4-hydroxyphenyl)propionic acid and the following monohydric or polyhydric alcohol:

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiro glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and a mixture thereof

### (16) Ester of 3,5-t-butyl-4-hydroxyphenylacetic acid and the following monohydric or polyhydric alcohol:

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiro glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and a mixture thereof

### (17) Examples of amide of β-(3,5-di-t-butyl-4-hydroxyphenyl)propionic acid

N,N'-bis[3-(3',5'-di-t-butyl-4'-hydroxyphenyl)propionyl] hydrazine, N,N'-bis[3-(3',5'-di-t-butyl-4'-hydroxyphenyl)propionyl]hexamethylenediamine, N,N'-bis[3-(3',5'-di-t-butyl-4'-hydroxyphenyl)propionyl] trimethylenediamine and a mixture thereof

Examples of the sulfur antioxidant include the followings: dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentanetetraylkis(3-lauryl thiopropionate) and the like.

Examples of the phosphorous antioxidant include the followings: triphenyl phosphite, tris(nonylphenyl)phosphite, tris(2,4-di-t-butylphenyl)phosphite, trilauryl phosphite, trioctadecyl phosphite, distearyl pentaerythritol diphosphite, diisodecyl pentaerythritol diphosphite, bis(2,4-di-t-butylphenyl)pentaerythritol diphosphite, bis(2,4-di-t-butyl-6-methylphenyl)pentaerythritol diphosphite, bis(2,4-di-t-butyl-6-methylphenyl)pentaerythritol diphosphite, bis(2,6-di-t-butyl-4-methylphenyl)pentaerythritol diphosphite, bis(2,4,6-tri-t-butylphenyl)pentaerythritol diphosphate, tristearyl sorbitol triphosphite, tetrakis(2,4-di-t-butylphenyl)-4,4'-diphenylene diphosphite, 2,2'-methylenebis(4,6-di-t-butylphenyl)2-ethylhexyl phosphite, 2,2'-ethylidenebis(4,6-di-t-butylphenyl)fluoro phosphite, bis(2,4-di-t-butyl-6-methylphenyl)ethyl phosphite, bis(2,4-di-t-butyl-6-methylphenyl)methyl phosphite, (2,4,6-tri-t-butylphenyl)-5-ethyl-5-butyl-1,3,2-oxaphosphorinane, 2,2',2"-nitrilo[triethyl-tris(3,3',5,5'-tetra-t-butyl-1,1'-biphenyl-2,2'-diyl)phosphite and a mixture thereof

Examples of the ultraviolet absorber include the followings:

### (1) Examples of salicylate derivative

phenyl salicylate, 4-t-butylphenyl salicylate, 2,4-di-t-butylphenyl 3',5'-di-t-butyl-4'-hydroxybenzoate, 4-t-octylphenyl salicylate, bis(4-t-butylbenzoyl)resorcinol, benzoylresorcinol, hexadecyl 3',5'-di-t-butyl-4'-hydroxybenzoate, octadecyl 3',5'-di-t-butyl-4'-hydroxybenzoate, 2-methyl-4,6-di-t-butylphenyl 3',5'-di-t-butyl-4'-hydroxybenzoate and a mixture thereof

### (2) Examples of 2-hydroxybenzophenone derivative

2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone and a mixture thereof

### (3) Examples of 2-(2'-hydroxyphenyl)benzotriazole

2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxypheny)benzotriazole, 2-(3',5'-di-t-amyl-2'-hydroxyphenyl)benzotriazole, 2-[2'-hydroxy-3',5'-bis(α,α -dimethylbenzyl)phenyl]-2H-benzotriazole, 2-[(3'-t-butyl-2'-hydroxyphenyl)-5'-(2-octyloxycarbonylethyl)phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-2'-hydroxy-5'-(2-methoxycarbonylethyl)phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl]benzotriazole, 2-[3'-t-butyl-2'-hydroxy-5'-[2-(2-ethylhexyloxy)carbonylethyl] phenyl]benzotriazole, 2-[2-hydroxy-3-(3,4,5,6-tetrahydrophthalimidemethyl)-5-methylphenyl]benzotriazole, 2-(3',5'-di-t-butyl-2-hydroxyphenyl)-5-chlorobenzotriazole, mixture of 2-(3'-dodecyl-2'-hydroxy-5'-methylphenyl)benzotriazole and 2-[3'-t-butyl-2'-hydroxy-5'-(2-isooctyloxycarbonylethyl)phenyl]benzotriazole, 2,2'-methylenebis[6-(2H-benzotriazol-2-yl)-4-(1,1,3,3-tetramethylbutyl)phenol, 2,2'-methylenebis[4-t-butyl-6-(2H-benzotriazol-2-yl)phenol], condensate of poly(3-11)(ethylene glycol) and 2-[3'-t-butyl-2'-hydroxy-5'-(2-methoxycarbonylethyl)phenyl]benzotriazole, condensate of poly(3-11)(ethylene glycol) and methyl 3-[3-(2H-benzotriazol-2-yl)-5-t-butyl-4-hydroxyphenyl]propionate, 2-ethylhexyl 3-[3-t-butyl-5-(5-chloro-2H-benzotriazol-2-yl)-4-hydroxyphenyl]propionate, octyl 3-[3-t-butyl-5-(5-chloro-2H-benzotriazol-2-yl)-4-hydroxyphenyl]propionate, methyl 3-[3-t-butyl-5-(5-chloro-2H-benzotriazol-2-yl)-4-hydroxyphenyl]propionate, 3-[3-t-butyl-5-(5-chloro-2H-benzotriazol-2-yl)-4-hydroxyphenyl]propionic acid and a mixture thereof.

### Examples of the photostabilizer include the followings.

### (1) Examples of hindered amine photostabilizer

bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(N-octoxy-2,2,6,6-tetramethyl-4-piperidyl)sebacate, bis(N-benzyloxy-2,2,6,6-tetramethyl-4-piperidyl)sebacate, bis(N-cyclohexyloxy-2,2,6,6-tetramethyl-4-piperidyl)sebacate, bis(1,2,2,6,6-pentamethyl-4-piperidyl) 2-(3,5-di-t-butyl-4-hydroxybenzyl)-2-butylmalonate, bis(1-acrolyl-2,2,6,6-tetramethyl-4-piperidyl) 2,2-bis(3,5-di-t-butyl-4-hydroxybenzyl)-2-butylmalonate, bis(1,2,2,6,6-penatmethyl-4-piperidyl decanedioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetarkis(2,2,6,6-tetramethyl-4-piperidyl) 1,2,3,4-butaneteracarboxylate, tetrakis(1,2,2,6,6-pentamethyl-4-piperidyl) 1,2,3,4-butanetetracarboxylate, mixed esterified product of 1,2,3,4-butanetetracarboxylic acid and 1,2,2,6,6-pentamethyl-4-piperidinol and 1-tridecanol, mixed esterified product of 1,2,3,4-butanetetracarboxylic acid and 2,2,6,6-tetramethyl-4-piperidinol and 1-tridecanol, mixed esterified product of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro[5.5]undecane, mixed esterified product of 1,2,3,4-butanetetracarboxylic acid and 2,2,6,6-tetarmethyl-4-piperidinol and 3,9-bis(2-hydroxy-1,1-dimethylethyl)-2,4,8,10-tetraoxaspiro[5.5]undecane, polycondensate of dimethyl succinate and 1-(2-hydroxyethyl)-4-hydroxy-2,2,6,6-tetramethylpiperidine, poly[(6-morpholino-1,3,5-triazin-2,4-diyl)((2,2,6,6-tetramethyl-4-piperidyl)imino)hexamethylene ((2,2,6,6-tetramethyl-4-piperidyl)imino)], poly[(6-(1,1,3,3-tetramethylbutyl)imino-1,3,5-triazin-2,4-diyl ((2,2,6,6-tetramethyl-4-piperidyl)imino)hexamethylene ((2,2,6,6-tetramethyl-4-piperidyl)imino)], polycondensate of N,N'-bis(2,2,6,6-tetramethyl-4-piperidyl)hexamethylenediamine and 1,2-bromoethane, N,N',4,7-tetrakis[4,6-bis(N-butyl-N-(2,2,6,6-tetramethyl-4-piperidyl)amino)-1,3,5-triazin-2-yl]-4,7-diazadecane-1,10 diamine, N,N',4-tris[4,6-bis(N-butyl-N-(2,2,6,6-tetramethyl-4-piperidyl)amino)-1,3,5-triazin-2-yl]-4,7-diazadecane-1,10 diamine, N,N',4,7-tetrakis[4,6-bis(N-butyl-N-(1,2,2,6,6-pentamethyl-4-piperidyl)amino)-1,3,5-triazin-2-yl]-4,7-diazadecane-1,10 diamine, N,N',4-tris[4,6-bis(N-butyl-N-(1,2,2,6,6-pentamethyl-4-piperidyl)amino)-1,3,5-triazin-2-yl]-4,7-diazadecane-1,10 diamine and a mixture thereof

### (2) Examples of acrylate photostabilizer

ethyl α-cyano-*β*,*β*-diphenylacrylate, isooctyl α-cyano-β,*β*-diphenylacrylate, methyl α-carbomethoxycinnamate, methyl α-cyano- *β*-methyl-methoxycinnamate, butyl α -cyano- *β*-methyl-p-methoxycinnamate, methyl α-carbomethoxy-p-methoxycinnamate and N-( β-carbomethoxy- *β*-cyano-vinyl)-2-methylindoline and a mixture thereof

### (3) Examples of nickel photostabilizer

nickel complex of 2,2'-thiobis-[4-(1,1,3,3-tetramethylbutyl)phenol], nickel dibutyldithiocarbamate, nickel salt of monoalkyl ester, nickel complex of ketoxime and a mixture thereof

### (4) Examples of oxamide photostabilizer

4,4'-dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide and a mixture thereof

### (5) Examples of 2-(2-hydroxyphenyl)-1,3,5-triazine photostabilizer

2,4,6-tris(2-hydroxy-4-octyloxyphenyl)-1,3,5-triazine, 2-(2-hydroxy-4-octyloxyphenyl)-4,6-bis(2,4-dimethylphenyl)
1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(4-methylphenyl)-1,3,5-triazine, 2-[2-hydroxy-4-(2-hydroxy-3-butyloxypropoxy)phenyl]-4,6-bis(2,4-dimethylphenyl)-1,3,5-triazine, 2-[2-hydroxy-4-(2-hydroxy-3-octyloxyphenyl)-4,6-bis(2,4-dimethylphenyl)-1,3,5-triazine and a mixture thereof.

Examples of the metal inactivating agent include the followings:
N,N'-diphenyloxamide, N-salicylal-N'-salicyloylhydrazine, N,N'-bis(salicyloyl)hydrazine, N,N'-bis(3,5-di-t-butyl-4-hydroxyphenylpropionyl)hydrazine, 3-salicyloylamino-1,2,4-triazole, bis(benzylidene)oxalyl dihydrazide, oxalinide, isophthaloyl dihydrazide, sebacoylbisphenyl hydrazide, N,N'-bis(salicyloyl)thiopropionyl dihydrazide and a mixture thereof

Examples of the peroxide scavenger include ester of *β* -thiodipropionic acid, mercaptobenzoimidazole, zinc salt of 2-mercaptobenzoimidazole, zinc salt of dibutyldithiocarbamic acid, dioctadecyl disulfide, pentaerythritol tetrakis( *β*-dodecylmercapto)propionate and a mixture thereof.

Examples of the polyamide stabilizer include copper or divalent manganese salt of iodide or phosphorous compound and a mixture thereof.

Examples of the hydroxyamine include N,N-dibenzylhydroxyamine, N,N-diethylhydroxyamine, N,N-dioctylhydroxyamine, N,N-dilaurylhydroxyamine, N,N-ditetradecylhydroxyamine, N,N-dihexadecylhydroxyamine, N,N-dioctadecylhydroxyamine, N,N-dibenzylhydroxyamine, N,N-dibenzylhydroxyamine, N-hexadecyl-N-octadecylhydroxyamine, N-heptadecyl-N-octadecylhydroxyamine and a mixture thereof.

Examples of the neutralizing agent include calcium stearate, zinc stearate, magnesium stearate, hydrotalcite (basic magnesium aluminum hydroxycarbonate hydride), melamine, amine, polyamide, polyurethane and a mixture thereof.

Examples of the lubricant include aliphatic hydrocarbon (e.g. paraffin, wax, etc.), higher aliphatic acid having 8 to 22 carbon atoms, higher aliphatic acid (having 8 to 22 carbon atoms) metal (Al, Ca, Mg, Zn) salt, aliphatic alcohol having 8 to 22 carbon atoms, polyglycol, ester of higher fatty acid having 4 to 22 carbon atoms and aliphatic monohydric alcohol having 4 to 18 carbon atoms, higher aliphatic amide having 8 to 22 carbon atoms, silicone oil, rosin derivative and the like.

Examples of the nucleating agent include the followings:
sodium 2,2'-methylenebis(4,6-di-t-butylphenyl)phosphate, [phosphoric acid-2,2'-methylenebis(4,6-di-t-butylphenyl)]dihydroxyaluminum, bis[phosphoric acid-2,2'-methylenebis(4,6-di-t-butylphenyl)] dihydroxyaluminum, tris[phosphoric acid-2,2'-methylenebis(4,6-di-t-butylphenyl)] aluminum, sodium bis(4,6-di-t-butylphenyl)phosphate, benzoic acid metal salt such as sodium benzoate, aluminum p-t-butylbenzoate, 1,3:2,4-bis(O-benzylidene)sorbitol, 1,3:2,4-bis(O-ethylbenzylidene)sorbitol, 1,3:2,4-bis(Omethylbenzylidene)sorbitol, 1,3-0-3,4-dimethylbenzylidene-2,4-O-benzylidenesorbitol, 1,3-O-benzylidene-2,4-0-3,4-dimethylbenzylidene sorbitol, 1,3:2,4-bis(O-3,4-dimethylbenzylidene)sorbitol, 1,3-O-p-chlorobenzylidene-2,4-0-3,4-dimethylbenzylidene sorbitol, 1,3-0-3,4-dimethylbenzylidene-2,4-O-p-chlorobenzylidene sorbitol, 1,3:2,4-bis(O-p-chlorobenzylidene)sorbitol and a mixture thereof.

Examples of the filler include calcium carbonate, silicate, glass fiber, asbestos, talc, kaoline, mica, barium sulfate, carbon black, carbon fiber, zeolite and a mixture thereof.

Among these additives above, fillers, phenol antioxidant, phosphorous antioxidant, ultraviolet absorber, hindered amine photostabilizer, peroxide scaveneger and neutralizing agent are preferably used.

Examples of the particularly preferred phenol antioxidant include the following compounds, and they may be used in combination of the two or more:
2,6-di-t-butyl-4-methylphenol, 2,4,6-tri-t-butylphenol, 2,4-dioctylthiomethyl-6-methylphenol, 2,2'-thiobis(6-t-butylphenol), 4,4'-thiobis(3-methyl-6-t-butylphenol),
2,2'-methylenebis(4-methyl-6-t-butylphenol), 2,2'-methylenebis[4-ethyl-6-t-butylphenol), 2,2'-methylenebis(4-ethyl-6-(α-methylcyclohexyl)phenol], 2,2'-methylenebis(4-methyl-6-cyclohexylphenol), 2,2'-methylenebis(4,6-di-t-butylphenol), 2,2'-ethylidenebis(4,6-di-t-butylphenol), 4,4'-methylenebis(6-t-butyl-2-methylphenol),4,4'-methylenebis(2,6-di-t-butylphenol), 4,4'-mbutylidenebis(3-methyl-6-t-butylphenol), 1,1'-bis(4-hydroxyphenyl)cyclohexane, 1,1-bis(5-t-butyl-4-hydroxy-2-methylphenyl)butane, 1,1,3-tris(5-t-butyl-4-hydroxy-2-methylphenyl)butane, ethylene glycol, bis[3,3-bis-3'-t-butyl-4'-hydroxyphenyl)butyrate], 2-t-butyl-6-(3'-t-butyl-5'-methyl-2'-hydroxybenzyl)-4-methylphenyl acrylate, 2,4-di-t-pentyl-6-[1-(2-hydroxy-3,5-di-t-pentylphenyl)ethyl]phenyl acrylate, 2,4,6-tris(3,5-di-t-butyl-4-phneoxy)-1,3,5-triazine, tris(4-t-butyl-3-hydroxy-2,6-dimethylbenzyl)isocyanurate, tris(3,5-di-t-butyl-4-hydroxybenzyl)isocyanurate, tris[2-(3',5'-di-t-butyl-4'
hydroxycinnamoyloxy)ethyl)isocyanurate, diethyl-3,5-di-t-butyl-4-hydroxybenzyl phosphonate, di-n-octadecyl-3,5-di-t-butyl-4-hydroxybenzyl phosphonate, calcium salt of 3,5-di-t-butyl-4-hydroxybenzylphosphonic acid monoester, n-octadecyl 3-(3,5-di-t-butyl-4-hydroxyphenyl)propionate, neopentanetetrayltetrakis(3,5-di-t-butyl-4-hydroxydihydrocinnamate), thiodiethylenebis(3,5-di-t-butyl-4-hydroxycinnamate), 1,3,5-trimethyl-2,4,6-tris(3,5-di-t-butyl-4-hydroxybenzyl)benzene, 3,6-dioxaoctamethylenebis(3,5-di-t-butyl-4-hydroxycinnamate), hexamethylenebis(3,5-di-t-butyl-4-hydroxycinnamate), triethylene glycol bis(5-t-butyll-4-hydroxy-3-methylcinnamate),3,9-bis[2-(3-(3-t-butyl-4-hydroxy-5-methylphenyl)propionyloxy)-1,1-dimethylethyl]-2,4,8,10-tetraoxaspiro
[5.5]undecane, N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine and the like.

Examples of the particularly preferred phosphorous antioxidant include the followings, and they may be used in combination of the two or more:
tris(nonylphenyl)phosphite, tris(2,4-di-t-butylphenyl)phosphite, distearyl pentaerythritol diphosphite, bis(2,4-di-t-butylphenyl)pentaerythritol diphosphite, bis(2,4-di-t-butyl-6-methylphenyl)pentaerythritol diphosphite, bis(2,6-di-t-butyl-4-methylphenyl)pentaerythritol diphosphite, tetrakis(2,4-di-t-butylphenyl)-4,4'-diphenylenediphosphite, 2,2'-methylenebis(4,6-di-t-butylphenyl) 2-ethylhexyl phosphite, 2,2'-ethylidenebis(4,6-di-t-butylphenyl) fluorophosphite, bis(2,4-di-t-butyl-6-methylphenyl) ethylphosphite, 2-(2,4,6-tri-t-butylphenyl)-5-ethyl-5-butyl-1,3,2-oxaphospholinane, 2,2',2"-nitrilo[triethyl-tris(3,3',5,5'-tetra-t-butyl-1,1'-biphenyl-2,2'-diyl)phosphite and the like

Examples of the particularly preferred ultraviolet absorber include the followings, and two or more kinds of them can be used.

phenyl salicylate, 4-t-butylphenyl salicylate, 2,4-di-t-butylphenyl 3',5'-di-t-butyl-4'-hydroxybenzoate, 4-t-octylphenyl salycilate, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxyphenyl)benzotriazole, 2-(3',5'-di-t-amyl-2'-hydroxyphenyl)benzotriazole, 2-[2'-hydroxy-3',5'-bis(α,α -dimethylbenzyl)phenyl]-2H-benzotriazole and the like

Examples of the particularly preferred photostabilizer include the followings, and two or more kinds of them can be used.

bis(2,2,6,6-tetramethyl-4-piperidyl)sebacate, bis(1,2,2,6,6-pentamethyl-4-piperidyl)sebacate, bis(N-octoxy-2,2,6,6-pentamethyl-4-piperidyl)sebacate, bis(N-octoxy-2,2,6,6-pentamethyl-4-piperidyl)sebacate, bis(N-benzyloxy-2,2,6,6-tetarmethyl-4-piperidyl)sebacate, bis(N-cyclohexyloxy-2,2,6,6-tetramethyl-4-piperidyl)sebacate, bis(1,2,2,6,6-pentamethyl-4-piperidyl) 2-(3,5-di-t-butyl-4-hydroxybenzyl)-2-butylmalonate, bis(1-acryloyl-2,2,6,6-tetramethyl-4-piperidyl) 2,2-bis(3',5-di-t-butyl-4-hydroxybenzyl)-2-butylmalonate, bis(2,2,6,6-tetramethyl-4-piperidyl)succinate, 2,2,6,6-tetramethyl-4-piperidyl methacrylate, 4-[3-(3,5-di-t-butyl-4-hydroxyphenyl)propionyloxy)-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetarmethyl-4-piperidyl)propionamide, tetrakis(2,2,6,6-tetramethyl-4-piperidyl) 1,2,3,4-butanetetracarboxylate. tetrakis(1,2,6,6-pentamethyl-4-piperidyl) 1,2,3,4-butanetetracarboxylate, mixed esterified product of 1,2,3,4-butanetetracarboxylic acid and 1,2,2,6,6-pentamethyl-4-piperidinol and 1-tridecanol, mixed esterified product of 1,2,3,4-butanetetracarboxylic acid and 2,2,6,6-tetramethyl-4-piperidinol and 1-tridecanol, mixed esterified product of 1,2,3,4-tetracarboxylic acid and 1,2,2,6,6-pentamethyl-4-piperidinol and 3,9-bis(2-hydroxy-1,1-dimethylethyl)-2,4,8,10-tetraoxaspiro[5.5]undecane, mixed esterified product of 1,2,3,4-butanetetracarboxylic acid and 2,2,6,6-tetarmethyl-4-piperidinol and 3,9-bis(2-hydroxy-1,1-dimethylethyl)-2,4,8,10-tetraoxaspiro[5.5]undecane, polycondensate of dimethyl succinate and 1-(2-hydroxyethyl)-4-hydroxy-2,2,6,6-tetramethylpiperidine, poly[(6-morpholino-1,3,5-triazin-2,4-diyl)((2,2,6,6-tetramethyl-4-piperidyl)imino)hexamethylene ((2,2,6,6-tetramethyl-4-piperidyl)imino)], poly[(6-(1,1,3,3-tetramethylbutyl)imino-1,3,5-triazin-2,4-diyl ((2,2,6,6-tetramethyl-4-piperidyl)imino)hexamethylene ((2,2,6,6-tetramethyl-4-piperidyl)imino)] and the like.

When the stabilizer composition and optionally used other additives are formulated in the organic material, all of known methods and devices for obtaining a homegeneous mixture can be used. For example, when the organic material is a solid polymer, the stabilizer composition and other additives can be directly dry-blended in the solid polymer, and the phosphite compound or other additives can also be formulated in the solid polymer in the form of a masterbatch. When the organic material is a liquid polymer, the stabilizer composition and other additives can be formulated in the polymer solution during or immediately after polymerization in the form of a solution or a dispersion of the stabilizer composition and other additives. On the other hand, when the organic material is a liquid such as oil, the stabilizer composition and other additives can also be dissolved by direct addition, and the stabilizer composition and other additives can also be added in the form of being dissolved or dispersed in the liquid medium.

The stabilizer composition of the present invention have excellent performance as a stabilizer for various organic materials, particularly for thermoplastic resins such as polyolefin, and the organic material containing this compound is stable to heat and oxidization on production, processing and use, which results in high-quality product.

The following Examples further illustrate the present invention in detail but are not to be construed to limit the scope thereof.

### Reference Example 1: Production of 2-[(2,4,8,10-tetra-t-butyl dibenzo[d,f][1,3,2]dioxaphosphepin-6-yl)oxy]ethyl 3-(3-t-butyl-4-hydroxy-5-methylphenyl)propionate (P-1)

To a 500 ml four-necked flask equipped with a thermometer, a stirrer and a cooling tube were charged 180 ml of anhydrous toluene, 18.8 g of 3,3',5,5'-tetra-t-butyl biphenyl-2,2'-diol and 9.45 g of triethylamine. To the mixture, 6.2 g of phosphorus trichloride was added with stirring after the inside of the vessel was purged with nitrogen. After completion of the addition, the mixture was heated at 80°C for 3 hours, and cooled to room temperature. Then, 4.75 g of triethylamine and 12.7 g of 2-hydroxyethyl 3-(3-t-butyl-4-hydroxy-5-methylphenyl)propionate dissolved in 50 ml of anhydrous toluene were charged thereto, and the mixture was kept at the constant temperature for 6 hours under reflux. Then, the mixture was cooled to room temperature, the produced triethylamine hydrochloride was filtered. After the filtrate was concentrated, the residue was purified by silica gel column chromatography, to obtain 20.6 g of a colorless crystal.
MS analysis (FD-MS): m/z 718
m.p.: 136°C
¹H-NMR (CDCl₃)
1.34 (s,18H), 1.39 (s,9H), 1.48 (s,18H), 2.21 (s,3H), 2.58 (t, 8Hz, 3H), 2.82 (t, 8Hz, 3H), 3.93 (m,2H), 4.11(t,8Hz,3H), 6.82 (t, 1Hz, 1H), 6.94 (d, 1Hz, 1H), 7.16 (d, 1Hz, 1H), 7.41 (d, 1Hz, 1H)

### Reference Example 2: Production of 2-[(2,4,8,10-tetra-t-butyl dibenzo[d,f][1,3,2]dioxaphosphepin-6-yl)oxy]ethyl 3-(3,5-di-t-butyl-4-hydroxyphenyl)propionate (P-2)

The similar procedure as in the Reference Example 1 was repeated except that the amount of anhydrous toluene, 3,3',5,5'-tetra-t-butyl biphenyl-2,2'-diol, triethylamine added before the addition of phosphorus trichloride, phosphorus trichloride and triethylamine added after the addition of phosphorus trichloride were changed from 180 ml, 18.8 g, 9.45 g, 6.2 g and 4.75 g, respectively to 120 ml, 20.5 g, 12.1 g, 6.9 g and 6.1 g, respectively, and 12.7 g of 2-hydroxyethyl 3-(3-t-butyl-4-hydroxy-5-methylphenyl)propionate dissolved in 50 ml of anhydrous toluene was replaced with 16.1 g of 2-hydroxyethyl 3-(3,5-di-t-butyl-4-hydroxyphenyl)propionate dissolved in 100 ml of anhydrous toluene to obtain 26.7 g of a colorless crystal.
MS analysis (FD-MS): m/z 761
m.p.: 100°C
¹H-NMR (CDCl₃)
1.34 (s,18H), 1.42 (s,18H), 1.48 (s,18H), 2.60 (s,2H), 2.85 (t, 2H), 3.94 (m,2H), 4.14 (m,2H), 5.07 (s, 1H), 6.99 (s, 2H), 7.16 (d, 2H), 7.42 (d, 2H)
³¹P-NMR (CDCl₃)
134.2 ppm

### Reference Example 3: Production of 2-[(2,4,8,10-tetra-t-butyl dibenzo[d,f][1,3,2]dioxaphosphepin-6-yl)oxy]ethyl 3-(3-t-butyl-4-hydroxyphenyl)propionate (P-3)

The similar procedure as in the Reference Example 2 was repeated except that 13.3 g of 2-hydroxyethyl 3-(3-t-butyl-4-hydroxyphenyl)propionate dissolved in 60 ml of anhydrous toluene was used instead of 2-hydroxyethyl 3-(3,5-di-t-butyl-4-hydroxyphenyl)propionate dissolved in 100 ml of anhydrous toluene, to obtain a white crystal.
MS analysis (FD-MS): m/z 704
m.p.: 63°C
¹H-NMR (CDCl₃)
1.34 (s,18H), 1.39 (s,9H), 1.48 (s,18H), 2.59 (s,2H), 2.85 (t, 2H), 3.9 (m,2H), 4.14 (m,2H), 4.77 (s, 1H), 6.56 (d, 1H), 6.87 (dd, 1H), 7.05 (d, 1H), 7.16 (d, 2H), 7.42 (d,2H) ³¹P-NMR (CDCl₃)
134.1 ppm

### Reference Example 4: Production of 2-[(dibenzo[d,f][1,3,2]dioxaphosphepin-6-yl)oxy]ethyl 3-(3,5-di-t-butyl-4-hydroxyphenyl)propionate (P-4)

The similar procedure as in the Reference Example 1 was repeated except that the amount of anhydrous toluene, triethylamine added before the addition of phosphorus trichloride, phosphorus trichloride and triethylamine added after the addition of phosphorus trichloride were changed from 180 ml, 9.45 g, 6.2 g and 4.75 g, respectively to 150 ml, 8.5 g, 5.5 g and 4.2 g, respectively, 18.8 g of 3,3',5,5'-tetra-t-butyl biphenyl-2,2'-diol was replaced with 7.5 g of biphenyl-2,2'-diol, and 12.7 g of 2-hydroxyethyl 3-(3-t-butyl-4-hydroxy-5-methylphenyl)propionate dissolved in 50 ml of anhydrous toluene was replaced with 12.9 g of 2-hydroxyethyl 3-(3,5-di-t-butyl-4-hydroxyphenyl)propionate dissolved in 50 ml of anhydrous toluene to obtain an oily substance.
MS analysis (FD-MS): m/z 536
¹H-NMR (CDCl₃)
1.42 (s,18H), 2.66 (s,2H), 2.90 (t, 2H), 4.16 (m,2H), 4.24 (m, 2H),7.00 (s, 2H), 7.17 to 7.48 (m, 8H)
³¹P-NMR (CDCl₃)
138.7 ppm

### Examples 1 to 6, Comparative Example 1, Reference Examples 5 to 6

### (Thermal stability test of linear low density polyethylene)

### [formulation]

| | |
|---|---|
| Unstabilized linear low density polyethylene | 100 parts by weight |
| Hydrotalcite | 0.1 parts by weight |
| Phenol-based stabilizer | 0.1 parts by weight ) |
| Stabilizer to be tested | |
| (Test Sample) | 0.15 parts by weight |

M-1 : 99:1 mixture of P-1 and A-1 (ratio by weight)
M-2 : 99:1 mixture of P-2 and A-2 (ratio by weight)
M-3 : 99:1 mixture of P-2 and A-1 (ratio by weight)
M-4 : 99:1 mixture of P-3 and A-1 (ratio by weight)
M-5 : 99:1 mixture of P-4 and A-1 (ratio by weight)

P-1 : 2-[(2,4,8,10-tetra-t-butyl dibenzo[d,f][1,3,2]dioxaphosphepin-6-yl)oxy]ethyl 3-(3-t-butyl-4-hydroxy-5-methylphenyl)propionate
P-2 : 2-[(2,4,8,10-tetra-t-butyl dibenzo[d,f][1,3,2]dioxaphosphepin-6-yl)oxy]ethyl 3-(3,5-di-t-butyl-4-hydroxyphenyl)propionate
P-3 : 2-[(2,4,8,10-tetra-t-butyl dibenzo[d,f][1,3,2]dioxaphosphepin-6-yl)oxy]ethyl 3-(3-t-butyl-4-hydroxyphenyl)propionate
P-4 : bis(2,4-di-t-butylphenyl)pentaerythritol diphosphite
A-1 : tri-i-propanolamine
A-2:poly[(6-(1,1,3,3-tetramethylbutyl)imino-1,3,5-triazine-2,4-diyl)((2,2,6,6-tetramethyl-4-piperidyl)imino)hexamethylene((2,2,6,6-tetramethyl-4-piperidyl)imino)](Chimassorb 944)
A0-1 : n-octadecyl 3-(3,5-di-t-butyl-4-hydroxyphenyl)propionate
A0-2 : neopentanetetrayltetrakis(3,5-di-t-butyl-4-hydroxydihydrocinnamate)

Using a 30 mm φ monoaxial extruder, the above formulating materials were melt-kneaded at 250°C to form pellets. Using a laboplasto mill, the resulting pellets were kneaded at 240°C, 100 rpm under a nitrogen atmosphere and the time at which a torque value due to crosslinking becomes maximum (gel build-up time) was measured. The results are shown in Table 1. The longer the gel build-up time, the more the crosslinking on kneading is retarded, which indicates excellent processing stability.

**Table 1**

| | Example | | | | | | Reference Example | | Comparative Example |
|---|---|---|---|---|---|---|---|---|---|
| | 1 | 2 | 3 | 4 | 5 | 6 | 5 | 6 | 1 |
| Test Sample | M-1 | M-2 | M-3 | M-4 | M-3 | M-3 | P-1 | P-2 | M-5 |
| Phenol-stabilizer | - | - | - | - | A0-1 | A0-2 | - | - | - |
| gel build-up time min. | 26 | 34 | 35 | 20 | 44 | 45 | 25 | 34 | 7 |

## Claims

1. A stabilizer composition which comprises a phosphite of formula (I) 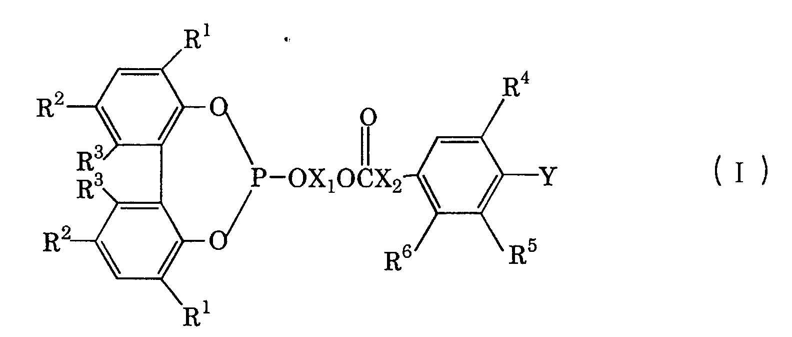 wherein R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, R³ and R⁶ each independently represent a hydrogen atom or an alkyl group having 1 to 8 carbon atoms, X₁ represents a divalent alcohol residue, X₂ represents a direct bond or an alkylene group having 1 to 8 carbon atoms, and Y represents a hydroxyl group,
and an amine (A).

2. A stabilizer composition according to claim 1 wherein the amine (A) is at least one amine selected from the group consisting of trialkanolamines; dialkanolamines; monoalkanolamines; aromatic amines; alkylamines; polyalkylenepolyamines; and hindered amine-based photostabilizers.

3. A stabilized organic material composition which comprises an organic material and a stabilizer composition according to claim 1 or 2.

4. A stabilized organic material composition according to claim 3 wherein the organic material is a thermoplastic resin.

5. A stabilized organic material composition according to claim 4 wherein the thermoplastic resin is a polyolefin.

6. A phosphite of formula (I) as defined in claim 1.
